# EUROPEAN PATENT APPLICATION

(11) **EP 3 910 178 A1**
(43) Date of publication of application: **17.11.2021**
(21) Application number: 20174187.3
(22) Date of filing: 12.05.2020
(51) Int. Cl.: F02C 7/18, F01D 25/12, F01D 25/00

(54) **GAS TURBINE WITH FILTER UNIT**

(71) Applicant: Siemens Aktiengesellschaft, 80333 München (DE)
(72) Inventor: Nogenmyr, Karl-Johan, 58561 Linghem (SE)

(57) **Abstract**

A gas turbine has a compressor and a combustion section and an expansion turbine, wherein the compressor and the expansion turbine each comprises several rows of blades attached to a rotor and vanes attached to the casing. To protect the blades and vanes from overheating it is in some cases necessary to protect a row of blades or vanes by a flow of cooling air. This cooling air is supplied by a cooling air supply and passes a filter unit. To avoid a loss of sufficient cooling flow by clogging of the filter unit a supply valve is arranged in-between the cooling air supply and the filter input and a cleaning valve is arranged in-between the filter input and an exhaust path, so that a reverse flow could be enabled.

## Description

The invention relates to a gas turbine with a few rows of blades and vanes, wherein the blades/vanes of at one row are cooled with cooling air. To protect the cooled row, a filter unit is arranged to clean the cooling air.

A common gas turbine comprises a compressor, a combustion section and an expansion turbine. Within the gas turbine several rows of blades and vanes are arranged. Due to high temperature loads, it is necessary to cool at least some of the blades and/or vanes. Therefore, a flow of cooling air is provided by a cooling air supply. To prevent clogging of the small cooling channels inside the blades and vanes, usually a filter unit is arranged between the cooling air supply and the blades respectively vanes. Various versions of filter units are known, wherein a common solution uses an arrangement of small holes with diameters smaller than the cooling channels.

With the known solutions the blades and vanes could be protected from clogging whereby a sufficient flow of cooling air could be provided at least at the start of the gas turbine.

Dependent on the amount of particles within the cooling air coming from the cooling air supply the lifetime of the filter unit (with a guarantee of the sufficient cooling flow) is limited.

Task for the current invention is to ensure the cooling flow through the blades or vanes for an increased time span.

The task is solved with a gas turbine according to claim 1. An inventive method to operate an inventive gas turbine is indicated in claim 6. Advantageous embodiments are object of the dependent claims.

The generic gas turbine comprises a compressor and an expansion turbine each with at least one row of blades and at least one row of vanes. The compressor vanes are affixed to a compressor vane carrier and the turbine vanes are affixed to a turbine vane carrier. The compressor blades and also the turbine blades are affixed at a rotor.

Upstream of the compressor an air inlet and downstream of the expansion turbine a flue gas outlet is arranged. Between the compressor and the expansion turbine a combustion section is arranged.

Further, an exhaust path is arranged at the gas turbine. The gas turbine comprises a cooling air supply and a filter unit, whereby it is at first not relevant, if there are arranged at or inside the gas turbine. In operation the cooling air supply delivers a stream of cooling air to the filter unit at a filter unit input. A filter unit output is in connection with at least one cooled row. Here the cooled row is one of a row of compressor vanes, a row of compressor blades or a row of turbine vanes or a row of turbine blades.

To enhance the supply of cooling air instead of a direct connection to the filter unit according to the invention a supply valve is arranged in-between the cooling air supply and the filter input and further a cleaning valve is arranged in-between the filter input and the exhaust path.

This enables a cleaning proceeding for the filter unit by closing the supply valve and an opening of the cleaning valve. Even if a stop of the combustion, e.g. regular operation of the gas turbine, is necessary, it is advantageous as the time span with sufficient supply of cooling air through the filter unit could be increased.

An advantageous provision of the cooling air is achieved when a compressor plenum is used as cooling air supply. In this case it is necessary, that the compressor plenum has a connection to the flow path inside the compressor.

The usage of the inventive solution is further advantageous, if the filter unit is arranged inside the casing of the gas turbine.

The exhaust path with the connection to the input of the filter unit via the cleaning valve is used in an advantageous solution in connection to the flue gas outlet of the gas turbine.

To determine the necessity for a cleaning of the filter unit, it is advantageous to use a pressure measuring device, which is enabled to determine a pressure difference between the filter input and the filter output.

The gas turbine with the inventive solution with the filter unit in connection with the cooling air supply and the exhaust path, as described before, enables a new inventive method to control the gas turbine.

In an operation mode of the gas turbine a combustion takes places inside the combustion section. In this situation it is necessary, that the supply valve is open, and the cleaning valve is closed. As a result, a cooling air is supplied by the cooling air supply, flowing through the supply valve to the filter unit and further to the cooled row of compressor vanes or bladed or turbine vanes or blades.

Opposite to the operation mode the gas turbine could be switched into a cleaning mode. In this case the combustion is stopped. Further the supply valve is closed, and the cleaning valve is open. This enables flow of air through the filter unit from the filter output to the filter input and further through the cleaning valve to the exhaust path.

With the reversed flow of air through the filter unit a cleaning of the filter unit with a removal or particles could be archived.

An easy implementation of the cleaning mode could be archived, if the air stream flows in this case from the cooled row to the filter unit.

It is beneficial, to use the cleaning mode with the shutdown proceeding as a regular proceeding. This will decrease the need for a cleaning proceeding during the normal operation.

If a solution is used with a flow of air from inside the compressor respectively inside the expansion turbine through the cooled row of blades or vanes to the filter unit for the cleaning proceeding, it is advantageous, if the cleaning valve is opened after the temperature inside the gas path of the gas turbine is below a predefined temperature limit. This will prevent the cooled row of blades or vanes and the filter unit from thermal stress.

To enable a sufficient flow of air reverse through the filter unit in the cleaning mode, it is advantageous if the rotor further rotates during the cleaning mode.

To guarantee a sufficient flow of cooling air to the cooled row of blades or vanes, it is advantageous if a pressure difference between the filter input and the filter output is observed. This enables the possibility to start the cleaning proceeding, if the determined pressure difference at the filter unit exceeds a predefined value. Here it is necessary to top the combustion for an intermediate time span, but this prevent a thermal damage of the cooled row of blades or vanes.

The following figure shows schematically an example of an inventive gas turbine.

The gas turbine 01 comprises a compressor 03, a combustion section 04 and an expansion turbine 05. The compressor 04 and the expansion turbine 05 have each several rows of blades mounted to a common rotor and vanes mounted to vane carries. At the output of the extension turbine 05 an exhaust path 06 leads the flue gas to a chimney. Obviously, it is possible to arrange further installations in-between the expansion turbine 05 and the chimney, especially to recover further heat from the flue gas and/or the clean the flue gas. The designs of those components are well known and needs no further explanation.

At least one row of compressor blades or compressor vanes or turbine blades or turbine vanes is cooled with an air cooling. This row with cooled blades or vanes is further named as cooled row 08. To supply the cooled row 08 with the cooling air, a cooling air supply 12 is arranged at the compressor 03. To protect the blades or vanes of the cooled row 08 against clogging, a filter unit 11 is arranged between the cooling air supply 12 and the cooled row 08. Therefore, an input of the filter unit 11 is connected with the cooling air supply 12 and an output of the filter unit 11 is connected with the cooled row 08.

To guarantee a sufficient flow of cooling air the inventive solution further comprises a supply valve 13 in-between the cooling air supply 12 and input of the filter unit 11 and further a connection from the input of the filter unit 11 to the exhaust path 06, wherein also here a cleaning valve 14 is used to control the flow between the input of the filter unit 11 and the exhaust path 06.

This leads to the possibility to clean the filter unit 11 in a cleaning mode. Therefore, the supply valve 13 is closed and the cleaning valve 14 is open, so that a flow of air from the cooled row could flow backwards through the filter unit 11 from the output to the input and further to the exhaust path 06.

To determine the necessary to clean the filter unit 11, a pressure measuring device 15 is used to determine the pressure loss between the input and the output of the filter unit 11.

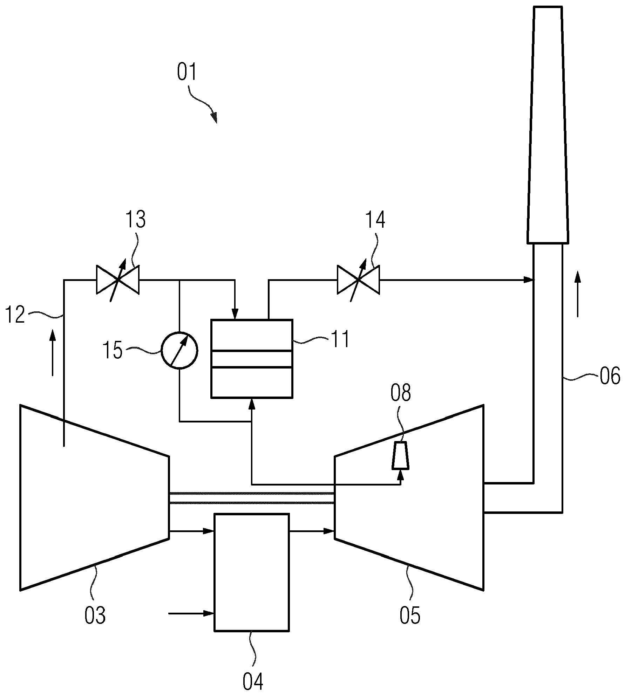

## Claims

1. Gas turbine with a compressor and a combustion section and an expansion turbine and a flue gas outlet and an exhaust path, wherein at and/or inside the gas turbine a cooling air supply and a filter unit is arranged, wherein the compressor comprises at least one row of compressor vanes affixed to a compressor vane carrier and at least one row of compressor blades affixed to a compressor rotor, wherein the expansion turbine comprises at least one row of turbine vanes affixed to a turbine vane carrier and at least one row of turbine blades affixed to a turbine rotor, wherein the cooling air supply is connected to a filter input of the filter unit and a filter output of the filter is connected with a cooled row as one of the rows of compressor vanes and turbine vanes and compressor blades and turbine blades,
**characterized in that**
a supply valve is arranged in-between the cooling air supply and the filter input and
a cleaning valve is arranged in-between the filter input and the exhaust path.

2. Gas turbine according to claim 1,
wherein the cooling air supply is constituted by a compressor plenum, which has a connection to the flow path inside the compressor.

3. Gas turbine according to claim 1 or 2,
wherein the filter unit is arranged inside the casing of the gas turbine.

4. Gas turbine according to one of the claims 1 to 3,
wherein the exhaust path is connected to the flue gas outlet.

5. Gas turbine according to one of the claims 1 to 4, comprising a pressure measuring device, which is enabled to determine a pressure difference between the filter input and the filter output.

6. Method to control a gas turbine according to one of the foregoing claims,
wherein in an operation mode a combustion takes places inside the combustion section and the supply valve is open and the cleaning valve is closed and cooling air is supplied by the cooling air supply to the cooled row, and wherein in a cleaning mode the combustion is stopped and the supply valve is closed and the cleaning valve is open and an air stream flows through the filter unit from the filter output to the filter input to the exhaust path.

7. Method according to claim 6,
wherein in the cleaning mode the air stream flows from the cooled row to the filter unit.

8. Method according to claim 6 or 7,
wherein the cleaning mode starts at a shutdown proceeding.

9. Method according to one of the claims 6 to 8,
wherein the cleaning mode starts after the temperature inside the gas path of the gas turbine is below a predefined temperature limit.

10. Method according to one of the claims 6 to 9,
wherein the rotor rotates during the cleaning mode.

11. Method according to one of the claims 6 to 9,
wherein when a pressure difference between the filter input and the filter output exceeds a predefined value the combustion is stopped and afterwards the cleaning proceeding starts.
